# EUROPÄISCHE PATENTSCHRIFT

(11) **EP 0 429 789 B1**
(45) Veröffentlichungstag und Bekanntmachung des Hinweises auf die Patenterteilung: **06.12.1995**
(21) Anmeldenummer: 90118168.5
(22) Anmeldetag: 21.09.1990
(51) Int. Cl.: H04N 5/91

(54) **Einrichtung zum Verarbeiten zweier Videosignale**
Device for the processing of two videosignals
Dispositif pour le traitement de deux signaux vidéo

(30) Priorität: 23.11.1989 DE 3938722
(43) Veröffentlichungstag der Anmeldung: 05.06.1991
(73) Patentinhaber: Grundig E.M.V. Elektro-Mechanische Versuchsanstalt Max Grundig GmbH & Co. KG, 90762 Fürth (DE)
(72) Erfinder: Gwiosda, Horst, Grundig E.M.V., Elektro-Mech., Kurgartenstrasse 37, D-8510 Fürth/Bay. (DE); Hökberg, Anders, Grundig E.M.V., Elektro-Mech., Kurgartenstrasse 37, D-8510 Fürth/Bay. (DE)

(56) Entgegenhaltungen:
- EP-A- 0 339 517
- DE-A- 3 801 523
- DE-C- 3 153 087
- JP-A- 1 248 878
- JP-A- 1 273 488
- US-A- 4 340 903
- PATENT ABSTRACTS OF JAPAN vol. 006, no. 116 (P-125)29. Juni 1982 & JP-A-57 044 271
- FUNKSCHAU. Nr. 21, Oktober 1989, MUNCHEN DE Seiten 66 - 71; WELZ: 'Aus deutschen Landen'
- PATENT ABSTRACTS OF JAPAN vol. 008, no. 239 (E-276)2. November 1984 & JP-A-59 117 383

## Beschreibung

Die Erfindung betrifft eine Einrichtung zum Verarbeiten zweier Videosignale gemäß dem Oberbegriff des Patentanspruchs 1.

Bei Produktionen in Fernsehstudios sind häufig Einrichtungen zum Verarbeiten zweier Videosignale, insbesondere sogenannte Trickmischer, eingesetzt worden. Die angewandte Tricktechnik bestand darin, daß ein erstes Fernsehbild in Form einer geometrischen Figur in ein zweites Fernsehbild eingestanzt wurde. Im Laufe der Entwicklung von Speichertechnologien wurde es möglich, den Raumbedarf und den Kostenaufwand für einen Vollbildspeicher immer weiter zu reduzieren, so daß sich eine Reihe von weiteren Anwendungsmöglichkeiten für die Verarbeitung gespeicherter Videosignale eröffnete.

Beispielsweise ist aus der GB-A1-21 13 950 eine Schaltung zum Einblenden eines Fernsehbildes in ein anderes bekannt, welche unter anderem zwei Vollbildspeicher aufweist. Die mit Hilfe einer Kamera gewonnenen Bildinformationen, z.B. ein Nachrichtensprecher vor einem einfarbigen Hintergrund, werden im Vollbildspeicher zwischengespeichert, wobei Konturensignale für die Steuerung der Einblendung erzeugt werden.

Auch für Videospiele werden in zunehmenden Maße Bildspeicher für zwei Videosignale benutzt, wobei Vordergrund und Hintergrund getrennt gespeichert und erst bei der Darstellung auf dem Monitor einander überlagert werden.

Aus der EP-B1-0 112 050 ist ein Anzeigesystem bekannt, bei dem in einem ersten Speicher Bilddaten und in einem zweiten Speicher Zeichendaten, z.B. Buchstaben, Ziffern usw. gespeichert werden. Mit dem zweiten Speicher ist ein Zeichengenerator verbunden, an dessen Ausgang die Bilddaten abgreifbar sind. Die Kombination dieser Bilddaten mit den am Ausgang des ersten Bildspeichers abgreifbaren Bilddaten erfolgt mittels einer Einrichtung des Anzeigesystems. Die Einrichtung weist ferner zwei Anschlüsse auf, an welche jeweils ein Monitor angeschlossen werden kann. Auf dem Bildschirm der beiden Monitore können entweder die Bilder aus dem ersten oder zweiten Bildspeicher oder beide Bilder in Kombination miteinander angezeigt werden. Ein solches Anzeigesystem erlaubt also die Überlagerung der Bilder aus zwei verschiedenen Bildspeichern bei der Darstellung auf dem Bildschirm eines Monitors.

Einrichtungen zum Verarbeiten zweier Videosignale werden auch in Camcordern zur Titelgestaltung von Camcorderaufnahmen eingesetzt.

Aus der EP-A2-0 326 327 ist ein Camcorder zur Titelgestaltung von Camcorderaufnahmen bekannt. Hierzu ist im Camcorder ein Bildspeicher angeordnet, insbesondere ein RAM (Random Access Memory), in welchem der Titel zwischengespeichert wird.

Der aus der EP-A2-0 326 327 bekannte Camcorder besitzt - neben der normalen Aufnahme - also die Möglichkeit des "Imposings" vor der eigentlichen Aufnahme. Unter "Imposing" versteht man ein Verfahren, bei dem kontrastreiche Vorlagen als Konturen in einem Vollbildspeicher des Camcorders gespeichert werden.

Ausgehend von einem Mittelwert des Videosignals (Grau) werden Signalpegel - die ober- bzw. unterhalb dieses Mittelwerts liegen - in Weiß- bzw. Schwarz-Werte umgesetzt. Bei dem so erzeugten Videosignal sind also keine Graustufen, sondern nur noch Weiß- bzw. Schwarz-Werte vorhanden. Dieses modifizierte Videosignal ist von Schwarz nach Weiß und umgekehrt umschaltbar und kann auch monochrom eingefärbt werden.

Beim aus der EP-A2-0 326 327 bekannten Camcorder wird dieses so erzeugte Videosignal, welches vor der eigentlichen Aufnahme mit dem Camcorder aufgenommen und durch Tastenbetätigung im Bildspeicher des Camcorders abgespeichert wurde, dann während der eigentlichen Aufnahme nach Tastenbetätigung dem Aufnahmesignal unterlegt (eingestanzt).

In der Praxis hat es sich herausgestellt, daß es oft schwierig ist, einen Titel schon vor der eigentlichen Aufnahme zu gestalten. Die Wirkung von Trickeffekten bei der künstlerischen Gestaltung von Produktionen kann in der Regel nicht im voraus hinreichend bestimmt werden. Obwohl der Bildspeicher eine Vielzahl von Möglichkeiten zur Bildbeeinflussung bietet, können in der Regel, z.B. erreichbare geometrische Effekte, nur beschränkt ausgenutzt werden.

Schließlich ist aus der EP-A-0 339 517 ein Videorecorder zur Verarbeitung mehrerer Eingangssignale bekannt. Hierzu enthält der Videorecorder Mittel zur Wiedergabe von Videosignalen, welche auf einem Videoband aufgezeichnet sind, weiterhin Mittel zur Aufzeichnung von Videosignalen auf dem Videoband, Videosignaleingabemittel zum Empfang von Videoeingangssignalen und zur Zuführung der letzteren zu den Aufzeichnungsmitteln, Umschaltemittel zur jeweiligen Auswahl von Videosignalen von den Wiedergabemitteln und den Videosignaleingabemitteln, Analog-Digital-Umsetzungsmittel zur Umsetzung von durch die Umschaltemittel ausgewählter Videosignalen in digitale Videosignale, erste und zweite Speichermittel, von denen jedes geeignet ist zum Speichern einer vorgegebenen Menge der digitalen Videosignale aus einem Feld und einem Datenrahmen davon und Digital-Analog-Umsetzungsmittel zur Umsetzung von aus jedem der ersten und zweiten Speichermittel gelesenen Signale in analoge Videosignale.

Weiterhin ist ein Monitor mit einem Bildschirm und Adressensteuermittel zum gesteuerten Schreiben und Lesen der Adressen der Speichermittel vorgesehen, um von den letzteren sogenannte Unterbildsignale, welche den Überwachungsmitteln von den Unterbildsignalen, welche jeweils von den ersten und zweiten Speichermitteln als erstes und zweites Bild gelesen worden sind, zur simultanen Anzeige auf dem Bildschirm zugeführt werden sollen, zu lesen. Schließlich sind eine Tastatureinrichtung, welche geeignet ist zur Umschaltung in einen sogenannten Aufbereitungsmodus des Videorecorders und zur Auswahl einer Betriebsart des Videorecorders aus den Betriebsarten Wiedergabe, Wiedergabepause, Aufnahme und Aufnahmepause; und sogenannte Systemsteuermittel zur Steuerung der Wiedergabemittel, der Aufzeichnungsmittel, der Umschaltemittel und der Adressensteuermittel vorgesehen.

Die Systemsteuermittel in Verbindung mit dem Videorecorder im Aufbereitungsmodus sind wie folgt programmiert:
a) wenn die Tastatureinrichtung betätigt wird, um eine der Betriebsarten Wiedergabe und Wiedergabepause auszuwählen, wählen die Umschaltemittel Videosignale von den Videosignalwiedergabemittel und die Adressensteuermittel bewirken, daß die von dem Videoband wiedergegebenen Signale in die ersten Speichermittel geschrieben werden und dann aus den ersten Speichermitteln gelesen werden, so daß das erste Bild den wiedergegebenen Videosignalen in dem Wiedergabemodus und dem letzten wiedergegebenen Bild als Standbild in dem Wiedergabepausenmodus entspricht;
b) wenn die Tastatureinrichtung betätigt wird, um die Betriebsart Aufnahmepause auszuwählen, wählen die Umschaltemittel die Videosignale von den Videosignaleingabemittel und die Adressensteuermittel bewirken, daß die Videosignale von den Videosignaleingabemittel in die zweiten Speichermittel geschrieben werden und dann aus den zweiten Speichermitteln gelesen werden, und bewirken gleichzeitig, daß die in den ersten Speichermitteln gespeicherten Signale gelesen werden, so daß das zweite Bild den Videosignalen von den Eingabemitteln entspricht und das erste Bild dem letzten wiedergegebenen Bild während eines vorausgehenden Wiedergabemodus entspricht;
c) wenn die Tastatureinrichtung betätigt wird, um die Betriebsart Aufnahme auszuwählen, wählen die Umschaltemittel die Videosignale von den Videosignaleingabemittel und die Adressensteuermittel bewirken, daß die Videosignale von den Videosignaleingabemittel abwechselnd in eines der ersten und zweiten Speichermittel geschrieben werden, und bewirken dann das Lesen aus den ersten und zweiten Speichermitteln, so daß Unterbildsignale, welche den Videosignalen von den Eingabemitteln entsprechen, jeweils von den ersten und zweiten Speichermitteln erhalten werden und gleichzeitig als erstes und zweites Bild angezeigt werden.

Der Erfindung liegt die Aufgabe zugrunde, eine Einrichtung zum Verarbeiten zweier Videosignale derart auszugestalten, daß eine nachträgliche Titelgestaltung von Camcorderaufnahmen ermöglicht wird.

Diese Aufgabe wird bei einer gattungsgemäßen Einrichtung durch die kennzeichnenden Merkmale des Patentanspruchs 1 gelöst.

Die erfindungsgemäße Einrichtung weist den Vorteil auf, daß die Titelgestaltung einige Zeit nach der Aufnahme und in aller Ruhe durchgeführt werden kann. Bei dieser nachträglichen Bearbeitung können alle Möglichkeiten der Bildbeeinflussung zur künstlerischen Gestaltung von Produktionen ausgenutzt werden. Der zusätzliche Schaltungsaufwand ist relativ gering, da moderne Camcorder ohnehin einen Speicher zur Zwischenspeicherung des von der Kamera aufgenommenen Videosignals aufweisen. Voraussetzung für die nachträgliche Titelgestaltung von Camcorderaufnahmen ist lediglich ein Camcorder mit zwei Videoausgängen und ein Videorecorder mit zwei Videoeingängen. Über das an den einen Videoausgang angeschlossene Kabel wird das Videosignal vom Videoband des Camcorders und über das am zweiten Videoausgang des Camcorders angeschlossene zweite Kabel wird dem Videorecorder das Videosignal vom Bildspeicher des Camcorders oder das normale Kamera-Aufnahmesignal zugeführt.

Bei der Ausführungsform nach Patentanspruch 2 ist im Videorecorder eine Erkennungsschaltung angeordnet, welche in Abhängigkeit vom Auftreten eines der beiden Videosignale einen Umschalter steuert. Dabei besteht auch die Möglichkeit der Umschaltung zwischen normalem Kamera-Aufnahmesignal und dem Signal bei der Wiedergabe vom Videoband des Camcorders. Dabei werden die Signale beider Signalquellen gleichzeitig im Videorecorder verarbeitet (z.B. aufgenommen), wobei auch die Möglichkeit besteht, Bildhälften von Bildern beider Signalquellen vertikal bzw. horizontal zusammenzufügen. Schließlich kann auch zwischem dem Videosignal einer normalen Aufnahme des Camcorders und dem Videosignal vom Videoband des Videorecorders umgeschaltet werden.

Die Ausführungsform gemäß Patentanspruch 3 weist den Vorteil auf, daß dem Benutzer noch weitere Möglichkeiten zur Bildbeeinflussung und zur künstlerischen Gestaltung von Produktionen eröffnet werden.

Durch die Anordnung einer Einrichtung zur Zeitbasiskorrektur gemäß Patentanspruch 4 wird sichergestellt, daß die beiden Videosignale zueinander synchron sind.

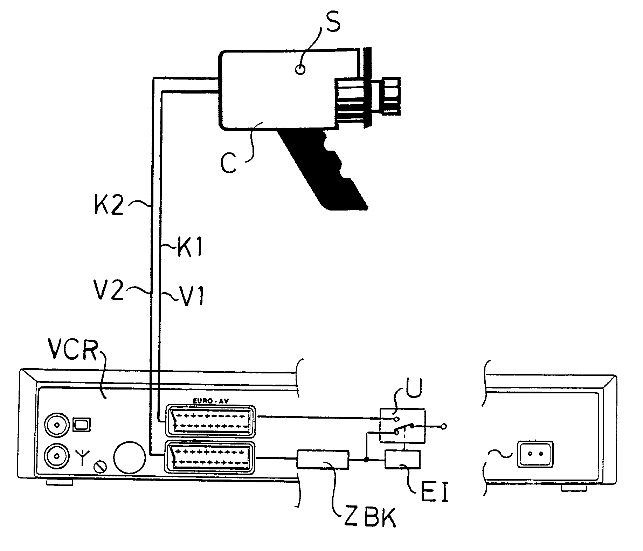

Die Erfindung wird im folgenden anhand einer in der Zeichnung dargestellten Ausführungsform näher beschrieben und erläutert. Auch wenn die Erfindung im folgenden anhand der nachträglichen Titelgestaltung von Camcorderaufnahmen beschrieben ist, so ist der Einsatz auch in anderen Fällen möglich, bei denen eine Verarbeitung zweier Videosignale vorgenommen werden soll.

Die Einrichtung besteht aus einem Camcorder C, welcher über zwei Kabel K1, K2 mit einem Videorecorder VCR verbunden ist. Nach manueller Betätigung eines am Camcorder C angeordneten Schalters S wird eine Verarbeitung der über die beiden Kabel K1, K2 zugeführten Videosignale V1, V2 im Videorecorder VCR vorgenommen.

Im Videorecorder VCR ist eine Erkennungsschaltung EI angeordnet, welche mit dem Steuereingang eines Umschalters U verbunden ist. An Stelle des Umschalters U kann auch im Videorecorder VCR eine Mischstufe oder eine Addierstufe angeordnet sein. Mit der Mischstufe ist ein kontinuierliches Überblenden vom Bild der einen Signalquelle zum Bild der anderen Signalquelle möglich, während bei der Ausführungsform mit einer Addierstufe die Bilder beider Signalquellen gleichzeitig addiert werden.

Weiterhin ist im Videorecorder VCR eine Einrichtung zur Zeitbasiskorrektur ZBK angeordnet, welche die Synchronisation der beiden Videosignale V1, V2 im Videorecorder VCR steuert.

Die erfindungsgemäße Einrichtung ermöglicht die nachträgliche Titelgestaltung von Camcorderaufnahmen, wobei der Benutzer alle Trickkombinationsmöglichkeiten zur künstlerischen Gestaltung von Produktionen ausnutzen kann. Je nach Wunsch des Benutzers kann der Benutzer die erzeugten Effekte mit dem Videorecorder aufnehmen und/oder am Fernsehbildschirm betrachten.

## Patentansprüche

1. Einrichtung zum Verarbeiten zweier Videosignale, insbesondere zur nachträglichen Titelgestaltung von Camcorderaufnahmen, mit mindestens einem in einem Camcorder (C) angeordneten Speicher zur Zwischenspeicherung des oder der Videosignale,
**dadurch gekennzeichnet**, daß die Einrichtung aus dem Camcorder (C) und einem über mindestens zwei Kabel (K1, K2) mit diesem verbundenen Videorecorder (VCR) besteht, daß der Camcorder (C) zwei Videoausgänge aufweist, wobei über das an dem ersten Videoausgang angeschlossene Kabel (K1) das Videosignal vom Videoband des Camcorders (C) und über das am zweiten Videoausgang angeschlossene Kabel (K2) das Videosignal vom Bildspeicher des Camcorders (C) oder das normale Kamera-Aufnahmesignal gleichzeitig dem Videorecorder (VCR) zugeführt werden kann und daß nach manueller Betätigung eines am Camcorder (C) angeordneten Schalters (S) eine Verarbeitung der über die beiden Kabel (K1, K2) zugeführten Videosignale (V1, V2) im Videorecorder (VCR) vorgenommen werden kann.

2. Einrichtung nach Anspruch 1, **dadurch gekennzeichnet,** daß im Videorecorder (VCR) eine Erkennungsschaltung (EI) angeordnet ist und daß die Erkennungsschaltung (EI) mit dem Steuereingang eines Umschalters (U) verbunden ist, wodurch der Umschalter (U) in Abhängigkeit vom Auftreten eines der beiden Videosignale (V1, V2) gesteuert wird.

3. Einrichtung nach Anspruch 1, **dadurch gekennzeichnet**, daß im Videorecorder (VCR) eine Mischstufe oder eine Addierstufe angeordnet ist, welcher die beiden Videosignale (V1, V2) gleichzeitig zugeführt werden.

4. Einrichtung nach einem oder mehreren der Ansprüche 1 bis 3, **dadurch gekennzeichnet**, daß im Videorecorder (VCR) eine Einrichtung zur Zeitbasiskorrektur (ZBK) angeordnet ist, welche die Synchronisation der beiden Videosignale (V1, V2) im Videorecorder (VCR) steuert.

## Claims

1. Device for processing two video signals, in particular for the retrospective design of captions for camcorder recordings, having at least one memory fitted in a camcorder (C) for the temporary storage of the video signal or video signals, characterized in that the device comprises the camcorder (C) and a video recorder (VCR) connected to the latter via at least two cables (K1, K2), in that the camcorder (C) has two video outputs, it being possible for the video signal from the video tape of the camcorder (C) to be fed to the video recorder (VCR) via the cable (K1) connected to the first video output and for the video signal from the picture store of the camcorder (C) or the normal camera recording signal to be fed to the video recorder (VCR) at the same time via the cable (K2) connected to the second video output, and in that, after manual actuation of a switch (S) fitted on the camcorder (C), a processing of the video signals (V1, V2) fed via the two cables (K1, K2) can be undertaken in the video recorder (VCR).

2. Device according to Claim 1, characterized in that a detection circuit (EI) is fitted in the video recorder (VCR) and in that the detection circuit (EI) is connected to the control input of a switch (U), as a result of which the switch (U) is controlled as a function of the occurrence of one of the two video signals (V1, V2).

3. Device according to Claim 1, characterized in that there is fitted in the video recorder (VCR) a mixer stage or an adder stage to which the two video signals (V1, V2) are fed at the same time.

4. Device according to one or more of Claims 1 to 3, characterized in that there is fitted in the video recorder (VCR) a time-base correction device (ZBK) which controls the synchronization of the two video signals (V1, V2) in the video recorder (VCR).

## Revendications

1. Dispositif pour traiter deux signaux vidéo, notamment pour la mise en forme ultérieure du titre d'enregistrements de caméscopes, comportant au moins une mémoire disposée dans un caméscope (C) et servant à mémoriser temporairement le ou les signaux vidéo,
caractérisé en ce que le dispositif est constitué par le caméscope (C) et par un magnétoscope (VCR) relié à ce caméscope par l'intermédiaire d'au moins deux câbles (K1, K2), que le caméscope (C) possède deux sorties vidéo, auquel cas le signal vidéo de la bande vidéo du caméscope (C) peut être envoyé par l'intermédiaire du câble (K1) raccordé à la première sortie vidéo, et le signal vidéo de la mémoire d'images du caméscope (C) ou le signal normal d'enregistrement de la caméra peut être envoyé, par l'intermédiaire du câble (K2) raccordé à la seconde sortie vidéo, simultanément au magnétoscope (VCR) et qu'après un actionnement manuel d'un commutateur (S) disposé sur le caméscope (C), un traitement des signaux vidéo (V1,V2) envoyés par l'intermédiaire des deux câbles (K1,K2) est exécuté dans le magnétoscope (VCR).

2. Dispositif suivant la revendication 1, caracterisé en ce qu'un circuit d'identification (EI) est disposé dans le magnétoscope (VCR) et que le circuit d'identification (EI) est relié à l'entrée de commande d'un commutateur (U), ce qui a pour effet que le commutateur (U) est commandé en fonction de l'apparition de l'un des deux signaux vidéo (V1,V2).

3. Dispositif suivant la revendication 1, caractérisé en ce que dans l'enregistreur vidéo (VC) est disposé un étage mélangeur ou un étage additionneur, auquel les deux signaux (V1, V2) sont envoyés simultanément.

4. Dispositif suivant une ou plusieurs des revendications 1 à 3, caractérisé en ce que dans le magnétoscope (VCR) est disposé un dispositif servant à réaliser une correction de la base de temps (ZBK), qui commande la synchronisation des deux signaux vidéo (V1,V2) dans le magnétoscope (VCR).
